(19) Europäisches Patentamt
European Patent Office
Office européen des brevets

(11) **EP 2 507 928 B1**

(12) **FASCICULE DE BREVET EUROPEEN**

(45) Date de publication et mention
de la délivrance du brevet:
**08.01.2014 Bulletin 2014/02**

(21) Numéro de dépôt: **10784799.8**

(22) Date de dépôt: **30.11.2010**

(51) Int Cl.:
***H04L 1/00*** (2006.01)

(86) Numéro de dépôt international:
**PCT/EP2010/068551**

(87) Numéro de publication internationale:
**WO 2011/064397 (03.06.2011 Gazette 2011/22)**

(54) **PROCÉDÉ DE CALIBRATION DE SEUILS ET MODULE DE CALIBRATION DE SEUILS POUR SYSTÈME DE TÉLÉCOMMUNICATIONS PAR SATELLITE**

VERFAHREN ZUR KALIBRIERUNG VON SCHWELLENWERTEN UND SCHWELLENWERTKALIBRIERMODLU FÜR EIN SATELLITENTELEKOMMUNIKATIONSSYSTEM

METHOD FOR CALIBRATING THRESHOLDS AND THRESHOLD CALIBRATION MODULE FOR A SATELLITE TELECOMMUNICATIONS SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2009 FR 0958475**

(43) Date de publication de la demande:
**10.10.2012 Bulletin 2012/41**

(73) Titulaire: **Astrium SAS**
**92150 Suresnes (FR)**

(72) Inventeur: **GIRAULT, Nicolas**
**F-31402 Toulouse Cedex 4 (FR)**

(74) Mandataire: **Ribeiro Dias, Alexandre**
**Schmit-Chrétien**
**Parc de Basso Cambo**
**4, rue Paul Mesplé**
**31100 Toulouse (FR)**

(56) Documents cités:
EP-A2- 1 259 015         WO-A2-02/25853
WO-A2-2008/018761         US-A1- 2007 110 002
US-A1- 2007 160 122

• **CLIVE TANG ED - INSTITUTE OF ELECTRICAL AND ELECTRONICS ENGINEERS: "An intelligent learning scheme for adaptive modulation", IEEE 54TH VEHICULAR TECHNOLOGY CONFERENCE. VTC FALL 2001. PROCEEDINGS 7-11 OCT. 2001 ATLANTIC CITY, NJ, USA; [IEEE VEHICULAR TECHNOLGY CONFERENCE], IEEE 54TH VEHICULAR TECHNOLOGY CONFERENCE. VTC FALL 2001. PROCEEDINGS (CAT. NO.01CH37211) IEEE PISCATA, vol. 1, 7 octobre 2001 (2001-10-07), pages 144-148, XP010562662, ISBN: 978-0-7803-7005-0**

**Description**

La présente invention appartient au domaine des télécommunications, et concerne les systèmes de télécommunications par satellite permettant de transmettre des données suivant une pluralité de formats de transmission.

Plus particulièrement, la présente invention concerne un procédé de calibration de seuil de sélection d'un format de transmission de données, ainsi qu'un module de calibration de seuil pour cette sélection.

Par « format de transmission », on entend un ensemble de paramètres déterminant la mise en forme des données transmises sur un canal de propagation radiofréquences, dit « canal », entre un dispositif émetteur et un dispositif récepteur d'un système de télécommunications par satellite, par exemple un canal entre un satellite et un terminal terrestre.

Lesdits paramètres sont généralement un type de modulation et un taux de codage de canal, chaque format de transmission correspondant généralement à un débit de données particulier.

A titre d'exemple, les spécifications du standard DVB-S2 (« Digital Video Broadcast - Satellite - Second Generation ») prévoient quatre types de modulation différents (QPSK, 8PSK, 16APSK et 32APSK) et onze taux de codage différents (de 1/4 à 9/10), générant vingt-huit formats de transmission différents.

L'intérêt de disposer de plusieurs formats de transmission possibles réside principalement dans la possibilité d'adapter le format de transmission à la qualité instantanée du canal de chaque terminal terrestre. Par « qualité instantanée du canal », on entend la qualité du canal telle qu'elle est perçue à l'échelle de la durée d'un paquet de données (de l'ordre de la milliseconde dans le cas d'un système de télécommunications par satellite DVB-S2).

Un terminal terrestre, pour lequel le canal est de bonne qualité, pourra se voir attribuer un format de transmission correspondant à un débit de données élevé, tandis qu'un terminal terrestre, pour lequel le canal est de mauvaise qualité, se verra attribuer un format de transmission correspondant à un débit de données plus faible.

Généralement, la sélection d'un format de transmission se fait par comparaison de la valeur estimée de la qualité instantanée du canal à des seuils prédéfinis, représentatifs de valeurs théoriques de la qualité instantanée du canal requises pour l'utilisation des différents formats de transmission.

Les seuils sont statiques, fixés a priori par l'opérateur du système de télécommunications, et déterminés de sorte à assurer théoriquement, pour chaque format de transmission, qu'un taux d'erreurs sur les données reçues est inférieur à un taux d'erreurs maximal toléré. Il est courant, en outre, de prévoir des marges entre les seuils retenus et les valeurs théoriques de la qualité instantanée du canal de propagation pour lesquelles les taux d'erreurs maximaux sont obtenus, afin de se prémunir contre d'éventuelles imprécisions sur la valeur estimée de la qualité instantanée du canal, liées à la précision de l'estimateur considéré, à des variations du canal, etc.

La mise en oeuvre de tels seuils statiques présente des inconvénients.

Tout d'abord, les seuils statiques sont les mêmes pour tous les terminaux terrestres, et ne tiennent pas compte des spécificités des différents canaux entre le satellite et chaque terminal terrestre. De ce fait, les marges introduites sont importantes, de sorte que la bande passante entre le satellite et les terminaux terrestres est largement sous-utilisée.

De plus, les seuils statiques ne permettent pas de prendre en compte les évolutions dans le temps des différents canaux. En particulier, le délai, dit « délai de boucle », entre l'instant où la qualité instantanée du canal est estimée et l'instant où le format de transmission, choisi en fonction de ladite valeur estimée, sera effectivement appliqué et présenté au récepteur, peut varier en pratique entre 0.5 secondes et 5 secondes dans un système de télécommunications par satellite tel que DVB-S2, où les satellites sont à poste en orbite géostationnaire (GEO). Il est à noter que la valeur de 0.5 secondes correspond à une valeur minimale incompressible du délai de boucle, induite par les temps de propagation de signaux entre la Terre et un satellite en orbite GEO.

Des variations de la qualité instantanée du canal peuvent se produire durant le délai de boucle, et le format de transmission sélectionné peut ne plus être adapté. Les variations du canal sont d'autant plus importantes lorsque des bandes de fréquences hautes sont utilisées, par exemple des bandes Ka, Q, V, etc.

Dans le contexte des systèmes de télécommunications par satellite, il est connu, de la demande de brevet Européen EP 2061167, de transmettre de façon périodique une séquence d'apprentissage pour chaque format de transmission disponible, et de vérifier quelles séquences d'apprentissage ont été bien démodulées/décodées, et de sélectionner, pour la transmission de paquets de données utilisateurs, un format de transmission pour lequel la séquence d'apprentissage correspondante a été bien démodulée/décodée.

Ce procédé présente l'inconvénient d'une réduction de la bande passante disponible pour la transmission de données utilisateurs, du fait de la nécessité de transmettre périodiquement des séquences d'apprentissage pour chaque format de transmission disponible (une séquence d'apprentissage correspondant à des données connues a priori du satellite et du terminal terrestre). De plus, ce procédé ne tient pas compte des variations possibles de la qualité instantanée du canal, liées notamment au délai de boucle nécessaire pour appliquer le format de transmission sélectionné.

Le document US 2007/0110002 A1 décrit un procédé de sélection de format de transmission en fonction d'une estimation de la qualité du canal, d'un délai maximum autorisé pour des raisons de qualité de service et d'une table de seuils.

Le document décrit que des relations entre rapport signal sur bruit (SNR) et taux d'erreurs paquets (PER) sont utilisées pour déterminer la table de seuils.

La présente invention vise à fournir une solution qui permette d'adapter les seuils aux spécificités de chaque canal, et de préférence de déterminer des seuils prenant en compte les variations de chaque canal au cours du délai de boucle.

La présente invention vise également à fournir une solution dont certains modes de mise en oeuvre puissent être implémentés avec peu ou pas de modifications des standards de télécommunications par satellite actuels, en particulier le standard DVB-S2.

La présente invention concerne un procédé de calibration d'un seuil de sélection d'un format de transmission, parmi une pluralité de formats de transmission, pour échanger des paquets de données sur un canal de propagation radiofréquences, dit « canal », entre un dispositif émetteur et un dispositif récepteur d'un système de télécommunications par satellite. Le procédé de calibration de seuil comporte :

- une étape de calcul d'une table de calibration du seuil :

  o en fonction d'erreurs estimées pour des paquets de données  reçus par le dispositif récepteur et utilisant le format de transmission associé au seuil à calibrer, et
  o en fonction de valeurs estimées de la qualité instantanée du canal lors de la réception desdits paquets de données,

  ladite table de calibration associant, à une pluralité de valeurs de la qualité instantanée du canal, des statistiques de transmission représentatives d'une quantité d'erreurs estimées pour une pluralité de paquets de données préalablement reçus par le dispositif récepteur,
- une étape de mise à jour du seuil comme étant, d'après la table de calibration, une valeur de la qualité instantanée du canal permettant d'assurer une valeur prédéfinie de la statistique de transmission.

En mettant à jour un seuil, associé à un dispositif récepteur, d'après une table de calibration calculée en fonction de signaux reçus par ledit dispositif récepteur, on comprend que ce seuil sera déterminé en tenant compte des conditions de réception spécifiques audit dispositif récepteur.

De préférence, les statistiques de transmission sont des statistiques de transmission anticipées. Une statistique de transmission anticipée, associée à une valeur donnée de la qualité instantanée du canal, est une statistique de transmission calculée pour des paquets de données reçus, par rapport à un instant auquel ladite valeur donnée de la qualité instantanée du canal a été estimée, après expiration d'un délai d'anticipation représentatif du délai de boucle. On comprend que le calcul de statistiques de transmission anticipées permet d'intégrer, dans la mise à jour du seuil, le fait que l'établissement d'un format de transmission n'est pas instantané, en particulier dans les systèmes de télécommunications par satellite.

Suivant un premier mode de calcul de statistiques de transmission anticipées, l'étape de calcul comporte :

- une sous-étape de décalage temporel des valeurs estimées de la qualité instantanée du canal de sorte à associer lesdites valeurs estimées de la qualité du canal à des paquets de données reçus, par rapport aux instants auxquels lesdites valeurs de la qualité  instantanée du canal ont été estimées, après expiration du délai d'anticipation,
- une sous-étape de calcul de statistiques de transmission anticipées en fonction d'erreurs estimées pour des paquets de données associés auxdites valeurs décalées de la qualité instantanée du canal.

Suivant un second mode de calcul de statistiques de transmission anticipées, l'étape de calcul comporte les sous-étapes :

- de calcul d'au moins un modèle de variation de la qualité instantanée du canal, en fonction de valeurs estimées de la qualité instantanée du canal,
- de calcul de statistiques de transmission instantanées en fonction d'erreurs estimées pour des paquets de données reçus par le dispositif récepteur, une statistique de transmission anticipée, associée à une valeur donnée de la qualité instantanée du canal, étant une statistique calculée pour des paquets de données reçus pour lesquels ladite valeur donnée de la qualité instantanée du canal a été estimée,
- de calcul de statistiques de transmission anticipées par combinaison d'au moins un modèle de variation de la qualité instantanée du canal et des statistiques de transmission instantanées.

Suivant des modes particuliers de mise en oeuvre du procédé de calibration, il comporte l'une ou plusieurs des caractéristiques suivantes, prises isolément ou suivant toutes les combinaisons techniquement possibles :

- le calcul des statistiques de transmission intègre un facteur d'oubli, de sorte à privilégier des erreurs estimées pour les derniers paquets de données reçus par le dispositif récepteur,
- les paquets de données reçus, en fonction desquels les statistiques de transmission sont calculées, correspondent à des données utilisateurs, et/ou à des séquences d'apprentissage connues du dispositif récepteur, des séquences d'apprentissage étant transmises lorsqu'une bande passante disponible au niveau du dispositif émetteur est sous utilisée,

- les paquets de données reçus par le dispositif récepteur, en fonction desquels les statistiques de transmission sont calculées, comprennent des paquets de données à destination d'autres dispositifs récepteurs.
- dans le cas de plusieurs dispositifs récepteurs, des seuils sont mis à jour indépendamment pour chacun desdits dispositifs récepteurs, en calculant au moins une table de calibration par dispositif récepteur en fonction de paquets de données reçus par ce dispositif récepteur,
- au cours de l'étape de mise à jour, deux seuils associés à la sélection d'un même format de transmission sont mis à jour, un premier seuil à mettre en oeuvre lorsque la valeur estimée de la qualité du canal croît, et un second seuil à mettre en oeuvre lorsque la valeur estimée de la qualité du canal décroît.

La présente invention concerne également un module de calibration de seuil pour la sélection d'un format de transmission, parmi une pluralité de formats de transmission, pour échanger des paquets de données entre un dispositif émetteur et un dispositif récepteur d'un système de télécommunications par satellite. Ledit module comporte :

- des moyens de calcul d'une table de calibration du seuil :

    o en fonction d'erreurs estimées pour des paquets de données reçus par le dispositif récepteur et utilisant le format de transmission associé au seuil à calibrer, et
    o en fonction de valeurs estimées de la qualité instantanée du canal lors de la réception desdits paquets de données,

    ladite table de calibration associant, à une pluralité de valeurs de la qualité instantanée du canal, des statistiques de transmission représentatives d'une quantité d'erreurs estimées pour une pluralité de paquets de données préalablement reçus par le dispositif récepteur,
- des moyens de mise à jour du seuil comme étant, d'après la table de calibration, une valeur de la qualité instantanée du canal permettant d'assurer une valeur prédéfinie de la statistique de transmission.

De préférence, les statistiques de transmission calculées sont des statistiques de transmission anticipées.
De préférence, le module de calibration comporte des moyens d'estimation des erreurs dans des paquets de données reçus par le dispositif récepteur, et des moyens d'estimation de la qualité instantanée du canal.
De préférence, le module de calibration comporte une mémoire non-volatile dans laquelle est mémorisé un historique déterminé d'après les paquets de données reçus antérieurement, l'historique étant adaptée à permettre le calcul de la table de calibration en tenant compte desdits paquets de données reçus antérieurement par le dispositif récepteur.
La présente invention concerne également un équipement, d'un système de télécommunications par satellite, comportant un module de calibration de seuils selon l'invention. L'équipement est un terminal terrestre, un satellite ou une station sol.
La présente invention concerne également un système de télécommunications par satellite, ledit système comportant au moins un module de calibration de seuils qui est embarqué dans un des équipements susmentionnés, ou distribué entre deux desdits équipements.
La description suivante de l'invention est faite en se référant aux figures, dans lesquelles des références identiques désignent des éléments identiques ou analogues, qui représentent de manière non limitative :

- Figure 1 : un diagramme illustrant schématiquement les différentes étapes d'un procédé de sélection et d'un procédé de calibration de seuils selon l'invention,
- Figures 2a et 2b : des diagrammes illustrant schématiquement le calcul de taux d'erreurs anticipés selon deux modes préférés de mise en oeuvre de l'invention,
- Figure 3 : un exemple illustrant la mise à jour d'un seuil en fonction d'une table de taux d'erreurs,
- Figure 4 : une représentation schématique d'un système de télécommunications par satellite.

La présente invention concerne un procédé de calibration d'un seuil de sélection d'un format de transmission de données, parmi une pluralité de formats de transmission, pour échanger des paquets de données sur un canal de propagation radiofréquences, dit « canal », entre un dispositif émetteur et un dispositif récepteur d'un système de télécommunications par satellite.

Comme on l'a dit, on entend par « format de transmission » un ou des paramètres déterminant la mise en forme des données transmises sur le canal. Ces paramètres sont par exemple un type de modulation et/ou un taux de codage de canal. D'autres paramètres peuvent également être considérés dans la définition d'un format de transmission, comme par exemple le type de codage de canal si plusieurs types de codage de canal sont disponibles (code convolutif, turbo-code, code LDPC, etc.), la puissance d'émission, le rythme symbole, etc.

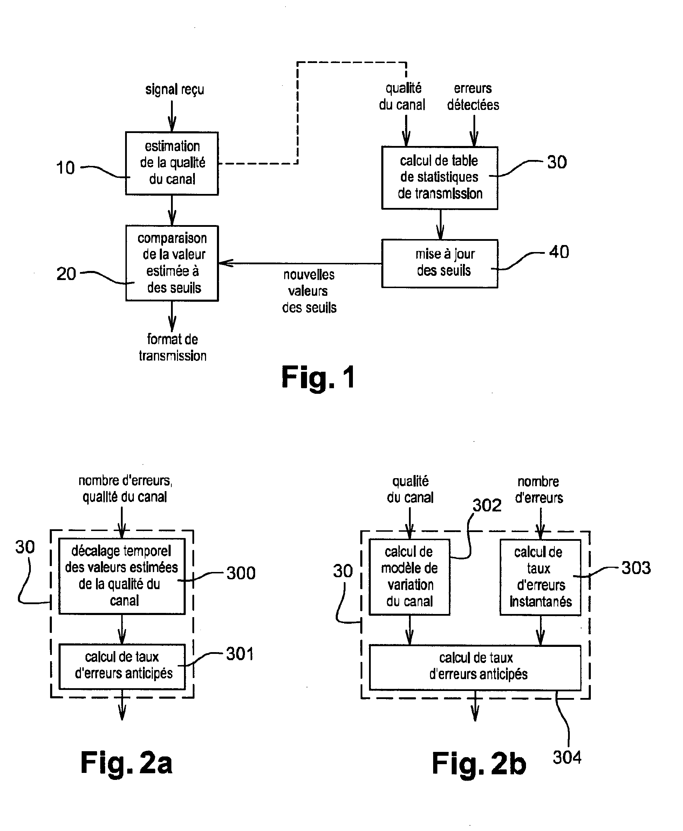

Tel que représenté sur la figure 1, un procédé de sélection de format de transmission comporte deux étapes 10 et 20 : une étape 10 d'estimation de la qualité instantanée du canal entre le dispositif émetteur et le dispositif récepteur, et une étape 20 de sélection d'un format de transmission à utiliser par comparaison de la valeur estimée de la qualité instantanée du canal à des seuils. Chaque seuil correspond à une valeur théorique de la qualité instantanée du canal requise pour l'utilisation d'un des formats de transmission disponibles pour transmettre des paquets de données du dispositif émetteur vers le dispositif récepteur.

Par « qualité instantanée du canal », on entend une estimation court terme de la qualité du canal, représentative de la qualité à un instant donné. Une telle estimation court terme peut utiliser le signal reçu par le dispositif récepteur sur une fenêtre temporelle de durée $\delta t$ représentative de la durée d'un paquet de données, qui est de l'ordre de la milliseconde pour un système de télécommunications par satellite DVB-S2.

Différentes représentations de la qualité instantanée du canal sont possibles, et un choix particulier de représentation ne constitue qu'une variante d'implémentation de l'invention. Par exemple, la qualité instantanée du canal peut être représentée sous la forme d'un rapport signal sur bruit, d'un rapport signal sur bruit plus interférences, de la puissance du signal reçu, d'une capacité du canal (au sens de la théorie de l'information), ou tout autre représentation connue de l'homme de l'art.

La qualité instantanée du canal est estimée à partir du signal reçu par le dispositif récepteur, et peut mettre en oeuvre tout procédé d'estimation de la qualité instantanée du canal connu de l'homme de l'art. La qualité instantanée du canal peut être estimée en fonction de paquets de données reçus par le dispositif récepteur, de la densité spectrale de puissance du signal reçu par le dispositif récepteur, etc.

Tel qu'illustré par la figure 1, un procédé de calibration de seuils selon l'invention comporte les étapes 30 et 40 suivantes :

- 30 de calcul d'une table de calibration du seuil :

  o en fonction d'erreurs estimées pour des paquets de données reçus par le dispositif récepteur et utilisant le format de transmission associé au seuil à calibrer, et
  o en fonction de valeurs estimées de la qualité instantanée du canal lors de la réception desdits paquets de données,

  ladite table de calibration associant, à une pluralité de valeurs de la qualité instantanée du canal, des statistiques de transmission représentatives d'une quantité d'erreurs estimées pour une pluralité de paquets de données reçus par le dispositif récepteur,

- 40 de mise à jour du seuil comme étant, d'après la table de calibration, une valeur de la qualité instantanée du canal permettant d'assurer une valeur prédéfinie de la statistique de transmission.

In est à noter que la figure 1 représente les différentes étapes du procédé de sélection et du procédé de calibration de façon très schématique. Notamment, la figure 1 ne renseigne pas sur les durées relatives des différentes étapes les unes par rapport aux autres. En particulier, les étapes 10 et 20 du procédé de sélection sont des étapes qui sont exécutées à chaque fois qu'un format de transmission doit être sélectionné. Les étapes 30 et 40 du procédé de calibration sont des étapes exécutées à plus long terme. Plus particulièrement, l'étape 30 de calcul est une étape qui nécessite de collecter des informations à partir d'une pluralité de paquets de données préalablement reçus par le dispositif récepteur pour calculer la table de calibration (également désignée ci-après par « table de statistiques de transmission »).

De préférence, les seuils de chaque format de transmission sont mis à jour au cours de l'étape 40, et on calcule au cours de l'étape 30 une table de statistiques de transmission pour chaque format de transmission.

Il est à noter que des seuils ne sont pas nécessairement associés à tous les formats de transmission. En particulier, un des formats de transmission, généralement celui correspondant au débit de données le plus faible, peut être utilisé par défaut, sans qu'un seuil lui soit associé. Par « chaque format de transmission », on entend donc chaque format de transmission auquel est associé au moins un seuil.

De préférence, des seuils différents sont définis pour chaque dispositif récepteur avec lequel le dispositif émetteur échange des paquets de données. Les seuils définis pour un dispositif récepteur donné sont calculés en fonction des signaux reçus par ledit dispositif récepteur donné.

On comprend donc qu'en exploitant les paquets de données reçus par un dispositif récepteur pour calibrer les seuils associés à ce dispositif récepteur, il sera possible d'adapter les seuils aux spécificités du canal entre le dispositif émetteur et ce dispositif récepteur.

Par « statistiques de transmission », on entend des statistiques représentatives d'une quantité erreurs estimées pour une pluralité de paquets de données reçus par le dispositif récepteur, c'est-à-dire représentatives d'une quantité de données reçues avec des erreurs ou, de manière équivalente, d'une quantité de données reçues sans erreurs.

Les paquets de données sont mis en forme conformément au format de transmission sélectionné, c'est-à-dire encodés avec le taux de codage canal sélectionné et modulés avec le type de modulation sélectionné. Au niveau du dispositif récepteur, les données reçues sont démodulées/décodées. Les erreurs correspondent à des différences entre les paquets de données reçus par le dispositif récepteur et les paquets de données effectivement émis par le dispositif émetteur.

Dans le contexte de l'invention, on entend de manière générale par « paquet » tout groupement de données transmises sur le canal. Il s'agit par exemple de « trames » dans le contexte de DVB-S2, de « cellules » dans le contexte d'un réseau ATM (« Asynchronous Transfer Mode »), etc.

Pour calculer une table de statistiques de transmission, des moyens d'estimation d'erreurs sont mis en oeuvre.

Les données échangées se présentent généralement sous la forme d'informations binaires, dites « bits ». Les erreurs estimées sont de préférence des erreurs sur les bits ou des erreurs sur les paquets (un paquet étant considéré comme erroné dès lors qu'au moins un bit reçu est erroné).

Lorsque les paquets de données sont des séquences d'apprentissage, l'estimation de bits erronés et de paquets erronés au niveau du dispositif récepteur est simple, dans la mesure où les séquences d'apprentissage sont connues a priori dudit dispositif récepteur. Le dispositif récepteur peut par exemple comparer la séquence d'apprentissage reçue après démodulation et décodage à la séquence d'apprentissage théoriquement émise, de préférence mémorisée dans une mémoire non-volatile dudit dispositif récepteur.

Dans le cas de données correspondant à des données utilisateurs, non connues a priori du dispositif récepteur, l'estimation de bits erronés et de paquets erronés peut s'effectuer suivant tout procédé connu.

Notamment, il est connu de l'homme de l'art qu'un décodeur canal peut déterminer avec une grande fiabilité s'il reste des erreurs suite au décodage canal. Par exemple, lorsqu'un codage canal de type Reed-Solomon ou BCH est utilisé, on peut calculer un syndrome en fonction duquel il est possible de déterminer s'il y a ou non des erreurs, et si ces erreurs peuvent être corrigées (c'est-à-dire dans la capacité de correction du décodeur). Ainsi, le décodeur canal peut estimer le nombre de bits comportant des erreurs, et/ou estimer si le paquet de données après décodage canal est erroné.

Pour calculer une table de statistiques de transmission, des moyens d'estimation de la qualité instantanée du canal doivent être mis en oeuvre. Tout procédé d'estimation de la qualité instantanée du canal connu de l'homme de l'art peut être mis en oeuvre. Il est à noter que la qualité instantanée du canal peut être estimée en fonction de paquets de données (par exemple ceux utilisés pour calculer les statistiques de transmission), de la densité spectrale de puissance du signal reçu par le dispositif récepteur, etc. De préférence, les moyens d'estimation de la qualité instantanée du canal, mis en oeuvre pour le calcul d'une table de statistiques de transmission, sont les mêmes moyens que ceux mis en oeuvre au cours de l'étape 10 (illustré par un trait discontinu sur la figure 1).

De préférence, les statistiques de transmission sont calculées au cours de l'étape 30 à partir de paquets de données correspondant à des données utilisateurs. De telles dispositions présentent l'avantage de ne pas réduire la bande passante disponible au niveau du dispositif émetteur par la transmission de séquences d'apprentissage (comme c'est le cas dans l'art antérieur). De plus, en utilisant des paquets de données correspondant à des données utilisateurs, l'invention peut être appliquée à des systèmes de télécommunications DVB-S2, sans qu'il soit nécessaire de modifier les spécifications DVB-S2 (l'utilisation de séquences d'apprentissage nécessite, a contrario, de définir lesdites séquences d'apprentissage dans les spécifications DVB-S2, par souci d'interopérabilité entre différents dispositifs émetteurs et récepteurs).

Il est possible également, pour un dispositif récepteur, d'exploiter les paquets de données reçus émis à destination d'autres dispositifs récepteurs, afin d'accélérer le calcul de tables de statistiques de transmission.

Rien n'exclut cependant d'utiliser des séquences d'apprentissage pour calculer les statistiques de transmission. En effet, la bande passante disponible peut se trouver sous-utilisée, par exemple du fait de la présence de peu de dispositifs récepteurs échangeant des paquets de données avec le dispositif émetteur. Dans ce cas, des séquences d'apprentissage sont avantageusement émises, en plus de paquets de données correspondant à des données utilisateurs, en exploitant la bande passante non utilisée. Le nombre de paquets de données reçus est augmenté par l'envoi de séquences d'apprentissage, ce qui permet d'accélérer le calcul des tables de statistiques de transmission.

Dans un mode préféré de mise en oeuvre, les statistiques de transmission sont des statistiques de transmission « anticipées ».

Une statistique de transmission anticipée, associée à une valeur donnée de la qualité instantanée du canal, est calculée pour des paquets de données reçus, par rapport à un instant auquel ladite valeur donnée de la qualité instantanée du canal a été estimée, après expiration d'un délai non nul, dit « délai d'anticipation Δt ». En d'autres termes, une table de statistiques de transmission anticipées d'un format de transmission associe, à une valeur estimée de la qualité instantanée du canal à un instant t, une statistique de transmission attendue pour des paquets de données, utilisant ledit format de transmission, qui seront reçus à l'instant (t+Δt).

Le délai d'anticipation Δt est de préférence sensiblement égal au délai de boucle qui est, dans un système de télécommunications par satellite DVB-S2, significativement supérieur à la durée δt considérée pour estimer la qualité instantanée du canal (représentative de la durée d'un paquet de données, de l'ordre de la milliseconde). Tel que décrit précédemment, le délai de boucle correspond au délai d'établissement du format de transmission sélectionné par rapport à l'instant où la qualité instantanée du canal a été estimée (au cours de l'étape 10). Le délai de boucle est déterminé en mettant en oeuvre des procédés connus de l'homme de l'art.

Le délai de boucle peut varier, d'un système DVB-S2 à un autre, entre approximativement 0.5 secondes et 5 secondes, du fait d'une utilisation de paramètres système différents. Au sein d'un même système DVB-S2, le délai de boucle n'est pas fixe et peut varier dans une plage temporelle plus réduite. Dans un tel cas où le délai de boucle n'est pas fixe, le délai d'anticipation Δt est par exemple fixé comme étant sensiblement égal au délai de boucle maximal ou à un délai de boucle moyen.

Les statistiques de transmission anticipées sont calculées, pour un dispositif récepteur donné, en fonction de paquets de données préalablement échangés entre le dispositif émetteur et ce dispositif récepteur.

On comprend que la connaissance de statistiques de transmission anticipées permet de prendre en compte les variations de la qualité instantanée du canal au cours du délai de boucle, et permet donc de déterminer des seuils qui sont adaptés à la sélection de formats de transmission qui ne seront appliqués qu'après expiration du délai de boucle.

Il est à noter que, suivant d'autres exemples, on détermine des statistiques de transmission « instantanées », c'est-à-dire en calculant directement les statistiques de transmission pour des paquets de données reçus sensiblement au même instant que celui auquel on a estimé la qualité instantanée du canal associée. Cela revient à considérer, contrairement au cas de statistiques de transmission anticipées, un délai sensiblement nul.

L'utilisation de statistiques de transmission instantanées présente notamment l'avantage, par rapport à l'état de l'art, de permettre une prise en compte des conditions de réception de chaque dispositif récepteur.

L'utilisation de statistiques de transmission anticipées constitue un mode préféré de mise en oeuvre qui, on l'a vu, permet de prendre en compte le délai de boucle inhérent au système de télécommunications par satellite. Le délai de boucle d'un système tel que DVB-S2 est très supérieur aux délais de boucle constatés dans les systèmes de télécommunications terrestres, du fait notamment de temps de propagation beaucoup plus longs (les satellites étant mis à poste en orbite GEO).

Les figures 2a et 2b représentent deux modes particuliers de mise en oeuvre de l'étape 30 de calcul de table de statistiques de transmission anticipées. Ces modes sont décrits en considérant l'exemple non limitatif où les statistiques de transmission calculées sont des taux d'erreurs, par exemple un taux d'erreurs sur les bits ou un taux d'erreurs sur les paquets.

Un taux d'erreurs sur les bits (connu sous le nom de « Bit Error Rate » ou « BER » dans la littérature anglo-saxonne) correspond au rapport entre le nombre de bits erronés et le nombre total de bits reçus, moyenné sur une pluralité de paquets de données. Le taux d'erreurs sur les bits correspond à une estimation de la probabilité pour qu'un bit émis soit reçu erroné.

Un taux d'erreurs sur les paquets (« Packet Error Rate » ou « PER » dans la littérature anglo-saxonne) correspond au rapport entre le nombre de paquets erronés et le nombre total de paquets reçus, moyenné sur une pluralité de paquets de données. Le taux d'erreurs sur les paquets correspond à une estimation de la probabilité pour qu'un paquet émis soit reçu erroné.

A des fins de clarté de la description des figures 2a et 2b, on considère la mise à jour d'un seul seuil, associé à un format de transmission désigné par $F_0$, et le calcul de la table de taux d'erreurs anticipés, associée audit format de transmission. Pour la mise à jour d'une pluralité de seuils, il convient de procéder de la même manière pour chacun desdits formats de transmission associés.

Dans la suite de la description, les notations suivantes sont utilisées :

- $c(t)$ désigne la valeur de la qualité instantanée du canal, estimée pour un paquet de données reçu à un instant t,
- $f(t)$ désigne le format de transmission utilisé pour le paquet de données reçu à l'instant t,
- $e(t)$ désigne le nombre d'erreurs estimé pour le paquet de données reçu à l'instant t.

La figure 2a représente un premier mode préféré de mise en oeuvre de l'étape 30 de calcul de la table de taux d'erreurs anticipés, associée au format de transmission $F_0$, dans laquelle les taux d'erreurs anticipés sont calculés en décalant temporellement les valeurs estimées de la qualité instantanée du canal par rapport aux paquets de données reçus.

Tel que représenté sur la figure 2a, l'étape 30 comporte, suivant ce mode de mise en oeuvre, les sous-étapes :

- 300 de décalage temporel des valeurs estimées de la qualité instantanée du canal,
- 301 de calcul de taux d'erreurs anticipés.

Au cours de la sous-étape 300 de décalage temporel, on retarde les valeurs estimées de la qualité instantanée du canal, estimées pour des paquets de données reçus par le dispositif récepteur, de sorte à associer lesdites valeurs estimées de la qualité du canal à des paquets de données reçus, par rapport à l'instant d'estimation desdites valeurs de la qualité instantanée du canal, après expiration du délai d'anticipation. En d'autres termes, on associe une valeur de la qualité instantanée du canal, estimée pour un premier paquet de données reçu par le dispositif récepteur, au nombre d'erreurs et au format de transmission d'un second paquet de données reçu, par rapport audit premier paquet de données, après expiration du délai de boucle.

On dispose alors, pour un second paquet de données reçu à un instant t, des informations suivantes :

- $e(t)$ le nombre d'erreurs estimé pour ledit second paquet,
- $f(t)$ le format de transmission utilisé pour ledit second paquet,
- $c(t-\Delta t)$ la valeur estimée, dite « valeur antérieure », de la qualité instantanée du canal pour le premier paquet de données.

Pour la mise à jour du seuil associé au format de transmission $F_0$, seuls les seconds paquets de données dont le format de transmission $f(t)$ est égal à $F_0$ sont considérés. Il est à noter que le format de transmission des premiers paquets de données peut être différent de $F_0$.

Au cours de la sous-étape 301 de calcul des taux d'erreurs anticipés, on incrémente des compteurs cumulatifs sur le nombre de paquets de données reçus et sur le nombre d'erreurs estimé pour lesdits paquets.

De préférence, on dispose de compteurs différents pour chaque valeur de la qualité instantanée du canal pour laquelle on cherche à calculer un taux d'erreurs anticipé. Par exemple, pour le format de transmission $F_0$ et une valeur $C_0$ de la qualité instantanée du canal, on incrémente des compteurs désignés par $D(F_0,C_0)$ pour le nombre de paquets reçus, par $E(F_0,C_0)$ pour le nombre d'erreurs estimé.

Dans le cas d'un calcul de taux d'erreurs sur les paquets de données : si un paquet de données, reçu à un instant t, est mis en forme suivant le format de transmission $F_0$, et si la valeur antérieure $c(t-\Delta t)$ de la qualité instantanée du canal est sensiblement égale à $C_0$, on incrémente les compteurs $D(F_0,C_0)$ et $E(F_0,C_0)$ comme suit :

$$D(F_0,C_0) = D(F_0,C_0) + 1,$$

$$E(F_0,C_0) = E(F_0,C_0) + e(t).$$

où $e(t)$ prend la valeur 0 ou 1 suivant que le paquet est reçu correctement ou est erroné.

Les équations précédentes deviennent, dans le cas du calcul d'un taux d'erreurs sur les bits :

$$D(F_0,C_0) = D(F_0,C_0) + n(t),$$

$$E(F_0,C_0) = E(F_0,C_0) + e(t),$$

où $e(t)$ peut prendre toutes les valeurs comprises entre 0 et le nombre $n(t)$ de bits que comporte le paquet de données considéré, le nombre $n(t)$ de bits par paquet pouvant varier d'un paquet de données à l'autre.

On peut également, dans le cas d'un calcul de taux d'erreurs sur les bits, incrémenter un compteur sur le nombre d'erreurs au carré, désigné par $EE(F_0,C_0)$, afin d'estimer également l'écart-type du nombre d'erreurs, qui peut être pris en compte notamment sous la forme d'une marge lors de la mise à jour du seuil. Le compteur $EE(F_0,C_0)$ est par exemple incrémenté comme suit :

$$EE(F_0,C_0) = EE(F_0,C_0) + e^2(t).$$

Le taux d'erreurs anticipé pour une valeur $C_0$ de la qualité instantanée du canal et pour le format de transmission $F_0$, désigné par $p_A(F_0,C_0)$, peut être exprimé sous la forme :

$$p_A(F_0,C_0) = E(F_0,C_0) / D(F_0,C_0).$$

La table de taux d'erreurs anticipés associée au format de transmission $F_0$, désignée par $p_A(F_0)$, est constituée par les taux d'erreurs anticipés $p_A(F_0,c)$ calculés pour chacune des valeurs c considérées de la qualité instantanée du canal.

La figure 2b représente un second mode préféré de mise en oeuvre de l'étape 30 de calcul de la table de taux d'erreurs anticipés, associée au format de transmission $F_0$, dans laquelle les taux d'erreurs anticipés sont calculés en fonction d'au moins un modèle des variation de la qualité instantanée du canal et en fonction de taux d'erreurs instantanés.

Tel que représenté sur la figure 2b, l'étape 30 comporte, suivant ce mode de mise en oeuvre, les sous-étapes :

- 302 de calcul d'au moins un modèle de variation de la qualité instantanée du canal,
- 303 de calcul de taux d'erreurs instantanés,
- 304 de calcul de taux d'erreurs anticipés.

Au cours de la sous-étape 302 de calcul d'au moins un modèle des variation de la qualité instantanée du canal, on calcule les variations de la qualité instantanée du canal pendant le délai de boucle, en calculant les différences entre les valeurs de la qualité instantanée du canal estimées pour une pluralité de paires de paquets de données séparés dans le temps par ledit délai de boucle.

Pour un premier paquet de données reçu à un instant (t-Δt), et un second paquet de données reçu à un instant t, dont les valeurs estimées de la qualité instantanée du canal sont respectivement c(t-Δt) et c(t), la variation de ladite qualité est désignée par Δc(t-Δt). Par exemple dans le cas où la qualité instantanée du canal est représentée par un rapport signal sur bruit, exprimé en décibels (dB), la variation Δc(t-Δt) peut être exprimée sous la forme :

$$\Delta c(t\text{-}\Delta t) = c(t\text{-}\Delta t) - c(t).$$

Dans un mode simple de mise en oeuvre de l'étape 30, on peut déterminer un seul modèle de variation de la qualité instantanée du canal, qui sera utilisé pour calculer les taux d'erreurs anticipés quelle que soit la valeur de la qualité instantanée du canal.

Dans un mode particulier de mise en oeuvre, considéré ci-après, on détermine une pluralité de tels modèles, associés à des valeurs différentes de la qualité instantanée du canal. Ce mode est avantageux dans la mesure où il a été constaté qu'en pratique, les variations du canal peuvent varier d'une plage à l'autre de valeurs de la qualité instantanée du canal.

Dans le cas où l'on détermine une pluralité de modèles, les variations calculées sont par exemple regroupées en fonction de la valeur antérieure de la qualité instantanée du canal, estimée pour le premier paquet de données. Par exemple, toutes les valeurs Δc(t-Δt) de variation calculées pour une valeur antérieure c(t-Δt) de la qualité instantanée du canal sensiblement égale à $C_0$ sont regroupées. Ensuite, on établit un modèle de variation de la qualité instantanée du canal pour chaque valeur considérée de ladite qualité instantanée du canal.

On décrit à présent des exemples de calcul du modèle de variation associé à une valeur antérieure c(t-Δt) de la qualité instantanée du canal sensiblement égale à Co.

Suivant un premier exemple, on incrémente un compteur cumulatif sur le nombre de paquets de données pour lesquels la valeur antérieure c(t-Δt) de la qualité instantanée du canal était sensiblement égale à $C_0$.

Pour une valeur donnée de la variation de la qualité instantanée du canal pendant le délai de boucle, on incrémente également un compteur cumulatif sur le nombre de paquets de données. Ce compteur totalise, parmi les paquets dont la valeur antérieure de la qualité instantanée du canal était sensiblement égale à $C_0$, les paquets pour lesquels la valeur estimée de la variation de la qualité instantanée du canal est sensiblement égale à ladite valeur donnée.

De préférence, on dispose de compteurs différents pour chaque valeur Δc de la variation du canal pour laquelle on cherche à calculer une probabilité. Par exemple, pour une valeur $\Delta c_0$ de la variation de la qualité instantanée du canal, on incrémente des compteurs désignés par So(Co) pour le nombre total de paquets reçus avec une valeur antérieure $c(t-\Delta t)$ de la qualité instantanée du canal sensiblement égale à $C_0$, et par $S_1(C_0,\Delta c_0)$ pour le nombre de paquets pour lesquels la valeur $\Delta c_0$ de variation a été estimée.

Si on a estimé, pour un paquet de données reçu à un instant $(t-\Delta t)$, que la valeur antérieure $c(t-\Delta t)$ de la qualité instantanée du canal était sensiblement égale à $C_0$, et que la valeur de variation de la qualité était sensiblement égale $\Delta c_0$, on incrémente les compteurs So(Co) et $S_1(C_0,\Delta C_0)$ comme suit :

$$S_0(C_0) = S_0(C_0) + 1,$$

$$S_1(C_0,\Delta c_0) = S_1(C_0,\Delta c_0) + 1.$$

La probabilité d'avoir une valeur de la variation de la qualité instantanée du canal sensiblement égale à $\Delta c_0$ lorsque la valeur antérieure était égale à $C_0$, désignée par $M(C_0,\Delta c_0)$, peut alors s'exprimer sous la forme :

$$M(C_0,\Delta c_0) = S_1(C_0,\Delta c_0) / S_0(C_0).$$

Le modèle de la variation de la qualité instantanée du canal associé à la valeur $C_0$ de la qualité instantanée du canal, désigné par $M(C_0)$, est constitué par les probabilités $M(C_0,\Delta c)$ calculées pour chacune des valeurs $\Delta c$ considérées de la variation de la qualité instantanée du canal.

Suivant un autre exemple, on peut faire l'hypothèse d'une distribution Gaussienne de la variation de la qualité instantanée du canal, et en estimer la moyenne et l'écart type en fonction des valeurs de variation calculées, en mettant en oeuvre des procédés connus de l'homme de l'art.

Au cours de la sous-étape 303, on calcule des taux d'erreurs instantanés. Un taux d'erreurs instantané, associé à une valeur donnée de la qualité instantanée du canal, est calculé directement pour une pluralité de paquets de données reçus avec la valeur donnée de la qualité instantanée du canal (par opposition à un taux d'erreurs anticipé, qui est calculé pour une pluralité de paquets de données reçus, par rapport à des instants auxquels la valeur estimée de la qualité instantanée du canal correspondait à ladite valeur donnée, après expiration du délai de boucle).

Pour un paquet de données reçu à un instant t, on dispose des informations suivantes :

- $e(t)$ le nombre d'erreurs estimé pour ledit paquet,
- $f(t)$ le format de transmission utilisé pour ledit paquet,
- $c(t)$ la valeur estimée, dite « valeur instantanée », de la qualité instantanée du canal pour ledit paquet de données.

Pour la mise à jour du seuil associé au format de transmission $F_0$, seuls les paquets de données dont le format de transmission $f(t)$ est égal à $F_0$ sont considérés.

Au cours de la sous-étape 303, on incrémente par exemple des compteurs cumulatifs sur le nombre de paquets de données reçus et sur le nombre d'erreurs estimé pour lesdits paquets.

De préférence, on dispose de compteurs différents pour chaque valeur de la qualité instantanée du canal pour laquelle on cherche à calculer un taux d'erreurs instantané. Par exemple, pour le format de transmission $F_0$ et une valeur $C_0$ de la qualité instantanée du canal, on incrémente des compteurs désignés par $D'(F_0,C_0)$ pour le nombre de paquets reçus, par $E'(F_0,C_0)$ pour le nombre d'erreurs estimé.

Dans le cas d'un calcul de taux d'erreurs sur les paquets de données : si un paquet de données, reçu à un instant t, est mis en forme suivant le format de transmission $F_0$, et si la valeur instantanée $c(t)$ de la qualité instantanée du canal est sensiblement égale à $C_0$, on incrémente les compteurs $D'(F_0,C_0)$ et $E'(F_0,C_0)$ comme suit :

$$D'(F_0,C_0) = D'(F_0,C_0) + 1,$$

$$E'(F_0,C_0) = E'(F_0,C_0) + e(t).$$

Les équations précédentes deviennent, dans le cas du calcul d'un taux d'erreurs sur les bits :

$$D'(F_0,C_0) = D'(F_0,C_0) + n(t),$$

$$E'(F_0,C_0) = E'(F_0,C_0) + e(t).$$

Le taux d'erreurs instantané pour une valeur $C_0$ de la qualité instantanée du canal et pour le format de transmission $F_0$, désigné par $p_I(F_0,C_0)$, peut être exprimé sous la forme :

$$p_I(F_0,C_0) = E'(F_0,C_0) / D'(F_0,C_0).$$

La table de taux d'erreurs instantanés associée au format de transmission $F_0$, désignée par $p_I(F_0)$, est constitué par les taux d'erreurs instantanés $p_I(F_0,c)$ calculés pour chacune des valeurs c considérées de la qualité instantanée du canal.

Au cours de la sous-étape 304 de calcul de taux d'erreurs anticipés, on combine les taux d'erreurs instantanés avec les modèles des variations de la qualité instantanée du canal.

Pour déterminer le taux d'erreurs anticipé associé à une valeur antérieure $C_0$ de la qualité instantanée du canal, pour le format de transmission $F_0$, désigné par $p_A(F_0,C_0)$, on peut par exemple calculer l'expression suivante :

$$p_A(F_0,C_0) = \Sigma_{\Delta c} \, p_I(F_0,C_0+\Delta c) \cdot M(C_0,\Delta c).$$

Le modèle de la variation $M(C_0)$ permet d'associer des probabilités $M(C_0,\Delta c)$ aux valeurs possibles $(C_0+\Delta c)$ de la qualité instantanée du canal après expiration du délai d'anticipation. En pondérant les taux d'erreurs instantanés $p_I(F_0,C_0+\Delta c)$ par les probabilités $M(C_0,\Delta c)$ associées auxdites valeurs possibles, on obtient le taux d'erreurs anticipé $p_A(F_0,C_0)$ associé à la valeur $C_0$ de la qualité instantanée du canal.

La table $p_A(F_0)$ de taux d'erreurs anticipés associée au format de transmission $F_0$ est constituée par les taux d'erreurs anticipés $p_A(F_0,c)$ calculés pour chacune des valeurs c considérées de la qualité instantanée du canal.

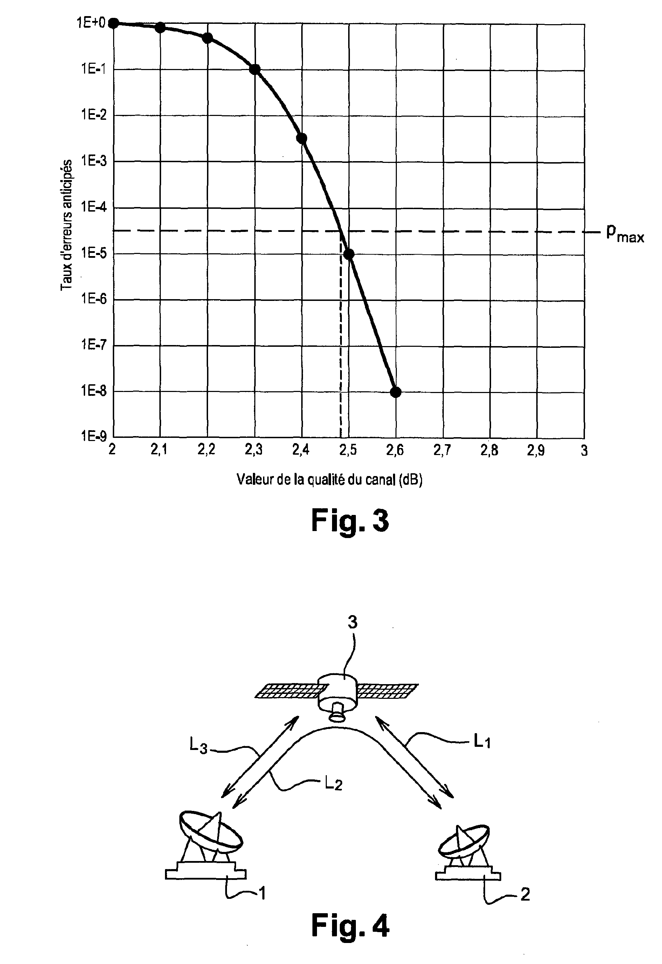

L'étape 40 de mise à jour de seuils est à présent décrite en référence à la figure 3, en considérant l'exemple non limitatif où les statistiques de transmission calculées sont des taux d'erreurs.

La figure 3 représente les taux d'erreurs anticipés déterminés pour le format de transmission $F_0$, pour des valeurs de la qualité instantanée du canal comprises entre 2 décibels (dB) et 2.6 dB, par pas de 0.1 dB. Dans cette figure, les taux d'erreurs anticipés ne sont pas représentés au-delà de 2.6 dB, du fait par exemple qu'aucune erreur n'a été détectée pour ces valeurs de la qualité instantanée du canal. On considère un taux d'erreurs maximal toléré $p_{max}(F_0)$ égal à 3E-05 (désigné par $p_{max}$ sur la figure 3). On voit qu'on obtient un taux d'erreurs de 3E-05 pour une valeur de la qualité de canal comprise entre 2.4 dB et 2.5 dB.

De préférence, on détermine la nouvelle valeur $S(F_0)$ du seuil comme étant la valeur de la qualité instantanée du canal pour laquelle on aurait un taux d'erreurs égal à $p_{max}$, par exemple en interpolant les taux d'erreurs de la table (déterminés par pas de 0.1 dB). Suivant un autre exemple non limitatif, la nouvelle valeur $S(F_0)$ du seuil est déterminée comme étant la valeur de la qualité de canal associée au taux d'erreurs calculé immédiatement inférieur à $p_{max}$ ; sur la figure 3, cela reviendrait à considérer une nouvelle valeur $S(F_0)$ du seuil de 2.5 dB.

De manière plus générale, la nouvelle valeur $S(F_0)$ du seuil qui doit être mis à jour est déterminée, dans le cas de statistiques de transmission représentatives de taux d'erreurs, de sorte que $p_A(F_0,S(Fo)) \leq p_{max}(F_0)$. On note que, dans le cas de statistiques de transmission représentatives de taux de paquets ou de bits reçus sans erreurs, la nouvelle valeur $S(F_0)$ du seuil serait déterminée de sorte le taux de paquets/bits reçus sans erreurs, obtenu pour le seuil $S(F_0)$, est égal ou supérieur à un taux minimal toléré.

En d'autres termes, la nouvelle valeur $S(F_0)$ du seuil est déterminée comme étant, d'après la table de statistiques de transmission, une valeur permettant d'assurer une valeur prédéfinie de la statistique de transmission.

Au démarrage de la collecte d'informations, c'est-à-dire lorsque l'on ne dispose pas de l'historique des échanges de paquets de données et que les compteurs sont initialisés à zéro, les seuils prennent de préférence des valeurs par défaut, prédéfinies par exemple par l'opérateur du système de télécommunications par satellite. Des valeurs par défaut sont utilisées tant que des paquets de données n'ont pu être échangés en nombre suffisant pour que tout ou partie des seuils puissent être mis à jour. Un tel nombre est par exemple considéré comme suffisant lorsqu'il est de l'ordre de la centaine ou préférentiellement de l'ordre du millier ou plus.

Il est avantageux d'imposer que des informations aient été collectées pour un nombre minimal de paquets de données afin d'améliorer la précision de l'estimation des statistiques de transmission.

Tant que des paquets de données n'ont pas été échangés en nombre suffisant, de préférence l'étape 40 de mise à jour du seuil d'au moins un format de transmission n'est pas exécutée. Suivant un autre exemple, ladite étape est exécutée mais la nouvelle valeur d'un seuil mis à jour correspond à la valeur par défaut, tant qu'un nombre insuffisant de paquets de données ont été reçus et traités au cours de l'étape 30.

Il est à noter que l'étape 30 de calcul de tables de statistiques de transmission est préférentiellement exécutée pour chaque paquet de données reçu, c'est-à-dire que chaque paquet de données reçu est pris en compte dans le calcul de tables de statistiques. L'étape 40 de mise à jour de seuils peut être exécutée avec une fréquence plus faible, définie par exemple en nombre de paquets reçus.

En outre, l'étape 40 de mise à jour de seuils peut être exécutée indépendamment pour chaque format de transmission. Par exemple, dès qu'un nombre minimal de paquets de données a été reçu pour un format de transmission donné, depuis la mise à jour précédente du seuil associé, l'étape 40 de mise à jour est exécutée pour ledit format de transmission.

Suivant un mode particulier de mise en oeuvre, compatible avec les modes précédents, l'exécution de l'étape 30 de calcul de tables de statistiques de transmission peut être suspendue temporairement. Un historique des échanges de paquets de données entre le dispositif émetteur et le dispositif récepteur est cependant conservé. L'historique comprend des informations adaptées à permettre le calcul de tables de calibration en tenant compte des paquets de données reçus antérieurement par le dispositif récepteur. L'historique correspond par exemple à l'état des différents compteurs cumulatifs, aux nombres d'erreurs estimés pour des paquets de données et aux valeurs estimées de la qualité de canal, etc.

L'exécution de l'étape 30 peut être reprise à tout moment et bénéficier de l'historique acquis préalablement à la suspension. La suspension/reprise de l'exécution de l'étape 30 est avantageuse notamment pour exclure certains paquets de données du calcul des statistiques de transmission, par exemple des paquets de données pour lesquels on sait a priori que les nombres d'erreurs estimés et/ou les valeurs estimées de la qualité de canal seraient aberrantes.

Suivant encore un autre mode particulier de mise en oeuvre, compatible avec les modes précédents, le calcul de statistiques de transmission intègre un facteur d'oubli, c'est-à-dire que les erreurs estimées pour des paquets de données reçus récemment sont privilégiées par rapport à des erreurs estimées pour des paquets de données plus anciens.

Ceci permet d'oublier progressivement des paquets de données trop anciens, dont les nombres d'erreurs estimés ne seraient plus représentatifs du canal actuel entre le dispositif émetteur et le dispositif récepteur.

Dans le cas des modes de mise en oeuvre décrits en référence aux figures 2a et 2b, l'implémentation du facteur d'oubli consiste par exemple en une pondération des compteurs cumulatifs incrémentés pour calculer les taux d'erreurs. La pondération est effectuée par multiplication des compteurs par un facteur de pondération $\alpha$ réel positif inférieur à un. La pondération est effectuée par exemple à chaque fois que les compteurs sont incrémentés, ou à intervalles de temps réguliers, etc.

Dans le cas des compteurs $D(F_0,C_0)$ et $E(F_0,C_0)$ incrémentés pour le calcul du taux d'erreurs anticipé associé au format de transmission $F_0$ et à la valeur antérieure $C_0$ de la qualité instantanée du canal, la pondération s'effectue par exemple comme suit :

$$D(F_0,C_0) = \alpha \cdot D(F_0,C_0),$$

$$E(F_0,C_0) = \alpha \cdot E(F_0,C_0).$$

Suivant encore un autre mode particulier de mise en oeuvre, compatible avec les modes précédents, on définit et on met à jour, pour chaque format de transmission, un seuil montant et un seuil descendant. Le seuil montant est utilisé (au cours de l'étape 20 de comparaison) lorsque la valeur estimée (au cours de l'étape 10 d'estimation) de la qualité instantanée du canal croît, tandis que le seuil descendant est utilisé lorsque la valeur estimée de la qualité instantanée du canal décroît. Dans le cas où les statistiques de transmission sont représentatives de taux d'erreurs, le seuil montant est de préférence supérieur au seuil descendant. Ce mode est avantageux car il permet d'éviter des changements de formats de transmission trop fréquents, qui pourraient survenir dans le cas d'une qualité instantanée du canal fluctuant autour d'un seuil unique.

Par exemple, le seuil descendant est déterminé, comme décrit précédemment en référence à la figure 3, de sorte à assurer un taux d'erreurs inférieur ou égal à un premier taux d'erreurs maximal toléré. Le seuil montant peut être défini arbitrairement en ajoutant une marge prédéfinie au seuil descendant déterminé, par exemple une marge de 3 dB. Une telle marge prédéfinie peut varier d'un dispositif récepteur à un autre, d'un format de transmission à un autre, etc. Suivant un autre exemple non limitatif, le seuil montant est déterminé comme décrit précédemment en référence à la figure 3, de sorte à assurer un taux d'erreurs inférieur ou égal à un second taux d'erreurs maximal toléré, le second taux d'erreurs maximal toléré étant inférieur au premier taux d'erreurs maximal toléré.

Les étapes 30, 40 du procédé de calibration sont exécutées par le dispositif récepteur, ou à la fois par le dispositif récepteur et le dispositif émetteur.

L'étape 30 de calcul de table de statistiques de transmission est de préférence exécutée par le dispositif récepteur. Suivant d'autres exemples, le dispositif récepteur détermine des informations (nombres d'erreurs, qualité instantanée du canal, formats de transmission, etc.) pour des paquets de données reçus, et transmet lesdites informations au dispositif émetteur qui exécute l'étape 30.

L'étape 40 de mise à jour du seuil d'au moins un format de transmission est de préférence exécutée par le dispositif récepteur. Dans ce cas, le dispositif récepteur détermine, en fonction de paquets de données qu'il a reçus (correspondant à des données utilisateurs et/ou des séquences d'apprentissage) les seuils à considérer pour déterminer un format de transmission qui soit adapté à la valeur estimée de la qualité instantanée du canal et à ses variations potentielles pendant le délai de boucle. Les seuils, après mise en jour, sont de préférence communiqués au dispositif émetteur, en particulier si ledit dispositif émetteur exécute l'étape 20 de comparaison.

Suivant d'autres exemples, la mise à jour est effectuée par le dispositif émetteur : dans ce cas le dispositif récepteur communique des informations permettant au dispositif émetteur de mettre à jour lesdits seuils, de préférence les tables de statistiques de transmission.

Il est à noter que les étapes 30, 40 du procédé pouvant être mises en oeuvre par le dispositif émetteur peuvent également être mises en oeuvre en tout ou partie par un dispositif de contrôle. Suivant un exemple non limitatif, le dispositif de contrôle peut mettre en oeuvre l'étape 40 de mise à jour en fonction d'informations reçues du dispositif récepteur, les seuils après mise à jour étant ensuite transmis au dispositif émetteur.

La figure 4 représente un système de télécommunications par satellite, comportant au moins une station sol 1 (parfois désignée par « Gateway » ou « Hub » dans la littérature anglo-saxonne) et une pluralité de terminaux terrestres 2, qui échangent des paquets de données via un satellite 3.

Un terminal terrestre 2 est mobile ou immobile, et peut être situé n'importe où dans une zone de couverture du satellite 3, y compris dans un aéronef (avion, hélicoptère, etc.), dans un bateau, etc. Un terminal terrestre 2 peut également être une station relais permettant de relayer des données reçues du satellite 3 vers une pluralité d'autres terminaux terrestres 2.

Dans le contexte de l'invention, le dispositif émetteur d'une part, et le dispositif récepteur d'autre part, peuvent être respectivement la station sol 1 ou un terminal terrestre 2 ou un satellite 3.

Suivant un premier exemple, le dispositif émetteur correspond au satellite 3, et le dispositif récepteur correspond à un terminal terrestre 2. Le canal entre le satellite 3 et le terminal terrestre 2 est désigné par la référence $L_1$ sur la figure 4. Dans ce premier exemple, la station sol 1 peut en outre correspondre au dispositif de contrôle.

Suivant un autre exemple, le dispositif émetteur correspond à la station sol 1, et le dispositif récepteur correspond à un terminal terrestre 2. Le canal entre la station sol 1 et le terminal terrestre 2 est désigné par la référence $L_2$ sur la figure 4, et englobe artificiellement le satellite 3. Cet exemple correspond au cas d'un satellite 3 de type dit « passif » (ou « relais »), qui ne démodule pas et ne décode pas les paquets de données reçus de la station sol 1 avant de les encoder et de les moduler à nouveau pour les transmettre à destination du terminal terrestre 2, mais se contente principalement de ré-amplifier les paquets de données reçus de la station sol 1, et éventuellement de les translater en fréquences.

Suivant encore un autre exemple, le dispositif émetteur correspond à la station sol 1, et le dispositif récepteur correspond au satellite 3. Le canal entre la station sol 1 et le satellite 3 est désigné par la référence $L_3$ sur la figure 4. Cet exemple correspond par exemple au cas d'un satellite 3 de type dit « actif » (ou « régénératif »), qui démodule et décode les paquets de données reçus de la station sol 1 avant de les encoder et de les moduler à nouveau pour les transmettre à destination du terminal terrestre 2.

D'autres exemples sont possibles. En particulier, les canaux $L_1$, $L_2$ et $L_3$ sont de préférence bidirectionnels, de sorte que les rôles du dispositif émetteur et du dispositif récepteur peuvent également être inversés.

La présente invention concerne également un module de calibration de seuils pour la sélection d'un format de transmission de paquets de données à échanger entre un dispositif émetteur et un dispositif récepteur d'un système de télécommunications par satellite.

Le module de calibration comporte des moyens de calcul, pour au moins un format de transmission, d'au moins une table de statistiques de transmission en fonction de paquets de données reçus par le dispositif récepteur, et des moyens de mise à jour du seuil dudit au moins un format de transmission.

Lesdits moyens de calcul de tables de statistiques de transmission et de mise à jour de seuils sont adaptés à mettre en oeuvre les étapes respectivement 30 de calcul de tables de statistiques de transmission et 40 de mise à jour de seuils du procédé de calibration selon l'un quelconque des modes de mise en oeuvre décrits.

Tel que décrit précédemment, lesdites étapes 30 de calcul de tables de statistiques de transmission et 40 de mise à jour de seuils peuvent être exécutées par le dispositif récepteur et/ou le dispositif émetteur, de sorte que le module de calibration de seuils est destiné à être embarqué dans un dispositif récepteur ou émetteur, ou à être distribué entre un dispositif émetteur et un dispositif récepteur.

Lorsque le module de calibration de seuils est destiné à être distribué entre un dispositif émetteur et un dispositif récepteur, il se décompose en deux sous-modules : un premier sous-module, correspondant aux moyens de calcul de tables de statistiques de transmission, et un second sous-module, correspondant aux moyens de mise à jour de seuils.

Le module de calibration de seuils, en particulier lorsqu'il est destiné à être embarqué dans un dispositif récepteur, ou, le cas échéant, le premier sous-module, comporte de préférence des moyens d'estimation des erreurs pour les paquets de données reçus par ledit dispositif récepteur, et des moyens d'estimation de la qualité instantanée du canal.

Dans un mode préféré de réalisation, le module de calibration de seuils ou, le cas échéant, chacun des sous-modules, comporte une unité centrale de traitement, par exemple un microprocesseur, reliée à une unité de stockage (disque dur magnétique, mémoire RAM et/ou ROM, disque optique, etc.) par un bus de communication.

Un produit programme d'ordinateur est mémorisé dans l'unité de stockage, sous la forme d'un ensemble d'instructions de code de programme à exécuter par l'unité centrale de traitement pour réaliser les fonctions des moyens de calcul de tables de statistiques de transmission, des moyens de mise à jour de seuils, des moyens d'estimation des erreurs et des moyens d'estimation de la qualité instantanée du canal.

Suivant certains modes de réalisation, le module de calibration de seuils comporte des circuits électroniques, de type ASIC, FPGA, etc., pouvant être configurés par l'unité centrale de traitement pour réaliser tout ou partie des fonctions susmentionnées.

En particulier, le module de calibration des seuils peut comporter un ou des registres à décalage pour retarder les valeurs estimées de la qualité instantanée du canal, tel que décrit en référence à la figure 2a pour la sous-étape 300.

De préférence, l'unité de stockage comporte une mémoire non-volatile dans laquelle est mémorisé l'historique des échanges de paquets de données entre le dispositif émetteur et le dispositif récepteur. De la sorte, le module de calibration de seuils est adapté à calculer des tables de calibration en tenant compte des paquets de données reçus antérieurement à une mise hors tension dudit module de calibration. De préférence, l'historique est mémorisé sous la forme de l'état des différents compteurs cumulatifs.

La présente invention concerne également un terminal terrestre 2 embarquant le module de calibration de seuils, un satellite 3 embarquant ledit module de calibration de seuils, et une station sol 1 embarquant ledit module de calibration de seuils.

La présente invention concerne également un système de télécommunications par satellite comportant au moins un module de calibration de seuils selon l'invention, le module de calibration étant embarqué dans l'un des équipements suivants, ou distribué entre deux des équipements suivants : un terminal terrestre 2, un satellite 3, une station sol 1.

## Revendications

**1.** - Procédé de calibration d'un seuil de sélection d'un format de transmission, parmi une pluralité de formats de transmission, pour échanger des paquets de données sur un canal de propagation radiofréquences, dit canal ($L_1$, $L_2$,$L_3$), entre un dispositif émetteur et un dispositif récepteur d'un système de télécommunications par satellite (3), la sélection du format de transmission associé audit seuil s'effectuant par comparaison d'une valeur estimée de la qualité instantanée dudit canal audit seuil, ledit procédé comportant :

  - une étape (30) de calcul d'une table de calibration du seuil :

    o en fonction d'erreurs estimées dans des paquets de données reçus par le dispositif récepteur et utilisant le format de transmission associé au seuil, et
    o en fonction de valeurs estimées de la qualité instantanée du canal lors de la réception desdits paquets de données,

  ladite table de calibration associant, à une pluralité de valeurs de la qualité instantanée du canal, des statistiques de transmission représentatives d'une quantité d'erreurs estimées pour une pluralité de paquets de données préalablement reçus par le dispositif récepteur,

- une étape (40) de mise à jour du seuil comme étant, d'après la table de calibration, une valeur de la qualité instantanée du canal permettant d'assurer une valeur prédéfinie de la statistique de transmission.

**2.** - Procédé de calibration selon la revendication 1, dans lequel, le satellite (3) étant en orbite géostationnaire, les statistiques de transmission sont des statistiques de transmission anticipées, une statistique de transmission anticipée, associée à une valeur donnée de la qualité instantanée du canal, étant une statistique de transmission calculée pour des paquets de données reçus, par rapport à un instant auquel ladite valeur donnée de la qualité instantanée du canal a été estimée, après expiration d'un délai d'anticipation représentatif du délai entre un instant d'estimation de la qualité instantanée du canal et un instant où un format de transmission, sélectionné en fonction de ladite valeur estimée de la qualité instantanée du canal, est appliqué et présenté au dispositif récepteur.

**3.** - Procédé de calibration selon la revendication 2, dans lequel l'étape (30) de calcul comporte :

- une sous-étape (300) de décalage temporel des valeurs estimées de la qualité instantanée du canal de sorte à associer lesdites valeurs estimées de la qualité du canal à des paquets de données reçus, par rapport aux instants auxquels lesdites valeurs de la qualité instantanée du canal ont été estimées, après expiration du délai d'anticipation,
- une sous-étape (301) de calcul de statistiques de transmission anticipées en fonction d'erreurs estimées pour des paquets de données associés auxdites valeurs décalées de la qualité instantanée du canal.

**4.** - Procédé de calibration selon la revendication 2, dans lequel l'étape (30) de calcul comporte les sous-étapes :

- (302) de calcul d'au moins un modèle de variation de la qualité instantanée du canal, en fonction de valeurs estimées de la qualité instantanée du canal,
- (303) de calcul de statistiques de transmission instantanées en fonction d'erreurs estimées pour des paquets de données reçus par le dispositif récepteur, une statistique de transmission anticipée, associée à une valeur donnée de la qualité instantanée du canal, étant une statistique calculée pour des paquets de données reçus pour lesquels ladite valeur donnée de la qualité instantanée du canal a été estimée,
- (304) de calcul de statistiques de transmission anticipées par combinaison d'au moins un modèle de variation de la qualité instantanée du canal et des statistiques de transmission instantanées.

**5.** - Procédé de calibration selon l'une des revendications précédentes, dans lequel le calcul des statistiques de transmission intègre un facteur d'oubli, de sorte à privilégier des erreurs estimées pour les derniers paquets de données reçus par le dispositif récepteur.

**6.** - Procédé de calibration selon l'une des revendications précédentes, dans lequel, dans le cas de plusieurs dispositifs récepteurs, des seuils sont mis à jour indépendamment pour chacun desdits dispositifs récepteurs, en calculant au moins une table de calibration par dispositif récepteur en fonction de paquets de données reçus par ce dispositif récepteur.

**7.** - Procédé de calibration selon l'une des revendications précédentes, dans lequel au cours de l'étape de mise à jour, deux seuils associés à la sélection d'un même format de transmission sont mis à jour : un premier seuil à mettre en oeuvre lorsque la valeur estimée de la qualité du canal croît, et un second seuil à mettre en oeuvre lorsque la valeur estimée de la qualité du canal décroît.

**8.** - Module de calibration d'un seuil de sélection d'un format de transmission, parmi une pluralité de formats de transmission, pour échanger des paquets de données sur un canal de propagation radiofréquences, dit canal ($L_1$, $L_2$,$L_3$), entre un dispositif émetteur et un dispositif récepteur d'un système de télécommunications par satellite, la sélection du format de transmission associé audit seuil s'effectuant par comparaison d'une valeur estimée de la qualité instantanée dudit canal, comportant

- des moyens de calcul d'une table de calibration du seuil :

o en fonction d'erreurs estimées dans des paquets de données reçus par le dispositif récepteur et utilisant le format de transmission associé au seuil à calibrer, et
o en fonction de valeurs estimées de la qualité instantanée du canal lors de la réception desdits paquets de données,

ladite table de calibration associant, à une pluralité de valeurs de la qualité instantanée du canal, des statistiques de transmission représentatives d'une quantité d'erreurs estimées pour une pluralité de paquets de données préalablement reçus par le dispositif récepteur,

- des moyens de mise à jour du seuil comme étant, d'après la table de calibration, une valeur de la qualité instantanée du canal permettant d'assurer une valeur prédéfinie de la statistique de transmission.

9. - Module de calibration selon la revendication 8, dans lequel, le satellite (3) étant en orbite géostationnaire, les statistiques de transmission sont des statistiques anticipées, une statistique de transmission anticipée, associée à une valeur donnée de la qualité instantanée du canal, étant une statistique de transmission calculée pour des paquets de données reçus, par rapport à un instant auquel ladite valeur donnée de la qualité instantanée du canal a été estimée, après expiration d'un délai d'anticipation représentatif du délai entre un instant d'estimation de la qualité instantanée du canal et un instant où un format de transmission, sélectionné en fonction de ladite valeur estimée de la qualité instantanée du canal, est appliqué et présenté au dispositif récepteur.

10. - Module de calibration selon l'une des revendications 8 à 9, comportant des moyens d'estimation des erreurs dans des paquets de données reçus par le dispositif récepteur, et des moyens d'estimation de la qualité instantanée du canal.

11. - Module de calibration selon l'une des revendications 8 à 10, comportant une mémoire non-volatile dans laquelle est mémorisé un historique déterminé d'après les paquets de données reçus antérieurement par le dispositif récepteur, l'historique étant adaptée à permettre le calcul de la table de calibration en tenant compte desdits paquets de données reçus antérieurement par le dispositif récepteur.

12. - Terminal terrestre (2) d'un système de télécommunications par satellite, comportant un module de calibration de seuil selon l'une des revendications 8 à 11.

13. - Satellite (3) d'un système de télécommunications par satellite, comportant un module de calibration de seuil selon l'une des revendications 8 à 11.

14. - Station sol (1) d'un système de télécommunications par satellite, comportant un module de calibration de seuil selon l'une des revendications 8 à 11.

15. - Système de télécommunications par satellite, comportant au moins un module de calibration de seuil selon l'une des revendications 8 à 11, ledit module étant embarqué dans un des équipements suivants ou distribué entre deux desdits équipements suivants : un terminal terrestre (2), un satellite (3), une station sol (1).


**Patentansprüche**

1. Verfahren zum Kalibrieren eines Grenzwerts zur Auswahl eines Übertragungsformats aus einer Vielzahl von Übertragungsformaten zum Austauschen von Datenpaketen auf einem Funk-Ausbreitungskanal, der Kanal ($L_1$, $L_2$, $L_3$) genannt wird, zwischen einer Sendeeinrichtung und einer Empfangseinrichtung einer Satelliten-Telekommunikationsanlage (3), wobei die Auswahl des Übertragungsformats, das dem besagten Grenzwert zugeordnet wird, durch das Vergleichen eines Schätzwertes der momentanen Qualität des besagten Kanals mit dem besagten Grenzwert erfolgt, und das besagte Verfahren folgendes umfasst:

- einen Schritt (30) zum Berechnen einer Tabelle zum Kalibrieren des Grenzwerts:

o in Abhängigkeit von geschätzten Fehlern in den Datenpaketen, die von der Empfangseinrichtung empfangen werden, und das Übertragungsformat verwenden, das dem Grenzwert zugeordnet wird, und
o in Abhängigkeit von Schätzwerten der momentanen Qualität des Kanals beim Empfang der besagten Datenpakete,

wobei die besagte Kalibriertabelle einer Vielzahl von Werten der momentanen Qualität des Kanals repräsentative Übertragungsstatistiken für eine Menge an geschätzten Fehlern für eine Vielzahl von Datenpaketen zuordnet, die zuvor von der Empfangseinrichtung empfangen worden sind.

- einen Schritt (40) zur Aktualisierung des Grenzwertes, der gemäß der Kalibriertabelle einen Wert der momentanen Qualität des Kanals darstellt, mit dem ein vorbestimmter Wert der Übertragungsstatistik gewährleistet werden kann.

2. Kalibrierverfahren nach Anspruch 1, bei dem die Übertragungsstatistiken, da sich der Satellit (3) in einer geostationären Umlaufbahn befindet, antizipierte Übertragungsstatistiken sind, wobei eine antizipierte Übertragungsstatistik, die einem gegebenen Wert der momentanen Qualität des Kanals zugeordnet wird, eine berechnete Übertragungsstatistik für die empfangenen Datenpakete im Verhältnis zu einem Zeitpunkt ist, an dem der besagte gegebene Wert der momentanen Qualität des Kanals geschätzt wurde, nach Ablauf einer repräsentativen Antizipationsfrist für die Zeitspanne zwischen einem Zeitpunkt der Schätzung der momentanen Qualität des Kanals und einem Zeitpunkt, an dem ein Übertragungsformat, das in Abhängigkeit vom besagten Schätzwert der momentanen Qualität des Kanals ausgewählt wird, angewandt, und der Empfangseinrichtung präsentiert wird.

3. Kalibrierverfahren nach Anspruch 2, bei dem der Berechnungsschritt (30) folgendes umfasst:

- einen untergeordneten Schritt (300) zur zeitlichen Verschiebung der Schätzwerte der momentanen Qualität des Kanals, um die besagten Schätzwerte der Qualität des Kanals empfangenen Datenpaketen im Verhältnis zu jenen Zeitpunkten zuzuordnen, an denen die besagten Werte der momentanen Qualität des Kanals nach Ablauf der Antizipationsfrist geschätzt worden sind,
- einen untergeordneten Schritt (301) zur Berechnung von antizipierten Übertragungsstatistiken in Abhängigkeit von geschätzten Fehlern für die Datenpakete, die den besagten verschobenen Werten der momentanen Qualität des Kanals zugeordnet werden.

4. Kalibrierverfahren nach Anspruch 2, bei dem der Berechnungsschritt (30) folgende untergeordnete Schritte umfasst:

- (302) die Berechnung zumindest eines Variationsmodells der momentanen Qualität des Kanals in Abhängigkeit von den Schätzwerten für die momentane Qualität des Kanals,
- (303) die Berechnung von momentanen Übertragungsstatistiken in Abhängigkeit von den geschätzten Fehlern für die von der Empfangseinrichtung empfangenen Datenpakete, wobei eine antizipierte Übertragungsstatistik, die einem gegebenen Wert der momentanen Qualität des Kanals zugeordnet wird, eine berechnete Übertragungsstatistik für die empfangenen Datenpakete ist, für die der besagte gegebene Wert der momentanen Qualität des Kanals geschätzt worden ist.
- (304) die Berechnung von antizipierten Übertragungsstatistiken durch die Kombination von zumindest einem Variationsmodell der momentanen Qualität des Kanals und den momentanen Übertragungsstatistiken.

5. Kalibrierverfahren nach einem der vorherigen Ansprüche, bei dem die Berechnung der Übertragungsstatistiken einen Vergessensfaktor berücksichtigt, sodass geschätzte Fehler für die letzten von der Empfangseinrichtung empfangenen Datenpakete privilegiert werden.

6. Kalibrierverfahren nach einem der vorherigen Ansprüche, bei dem Grenzwerte im Falle von mehreren Empfangseinrichtungen für jede der besagten Empfangseinrichtungen unabhängig voneinander aktualisiert werden, indem man zumindest eine Kalibriertabelle pro Empfangseinrichtung in Abhängigkeit von den Datenpaketen berechnet, die von dieser Empfangseinrichtung empfangen werden.

7. Kalibrierverfahren nach einem der vorherigen Ansprüche, bei dem im Laufe des Aktualisierungsschrittes zwei Grenzwerte, die der Auswahl eines selben Übertragungsformates zugeordnet werden, aktualisiert werden: ein erster Grenzwert, der anzuwenden ist, wenn der Schätzwert für die Qualität des Kanals steigt, und ein zweiter Grenzwert, der anzuwenden ist, wenn der Schätzwert für die Qualität des Kanals sinkt.

8. Modul zum Kalibrieren eines Grenzwertes zur Auswahl eines Übertragungsformats aus einer Vielzahl von Übertragungsformaten zum Austauschen von Datenpaketen auf einem Funk-Ausbreitungskanal, der Kanal ($L_1$, $L_2$, $L_3$) genannt wird, zwischen einer Sendeeinrichtung und einer Empfangseinrichtung einer Satelliten-Telekommunikationsanlage, wobei die Auswahl des Übertragungsformats, das dem besagten Grenzwert zugeordnet wird, durch das Vergleichen eines Schätzwertes der momentanen Qualität des besagten Kanals erfolgt, mit:

- Vorrichtungen zum Berechnen einer Tabelle zum Kalibrieren des Grenzwerts:

o in Abhängigkeit von geschätzten Fehlern in Datenpaketen, die von der Empfangseinrichtung empfangen werden, und das Übertragungsformat verwenden, das dem zu kalibrierenden Grenzwert zugeordnet wird, und

o in Abhängigkeit von Schätzwerten der momentanen Qualität des Kanals beim Empfang der besagten Datenpakete,

wobei die besagte Kalibriertabelle einer Vielzahl von Werten der momentanen Qualität des Kanals repräsentative Übertragungsstatistiken für eine Menge an geschätzten Fehlern für eine Vielzahl von Datenpaketen zuordnet, die zuvor von der Empfangseinrichtung empfangen worden sind,
- Vorrichtungen zur Aktualisierung eines Grenzwertes, der gemäß der Kalibriertabelle einen Wert der momentanen Qualität des Kanals darstellt, mit dem ein vorbestimmter Wert der Übertragungsstatistik gewährleistet werden kann.

9. Kalibriermodul nach Anspruch 8, bei dem die Übertragungsstatistiken, da sich der Satellit (3) in einer geostationären Umlaufbahn befindet, antizipierte Übertragungsstatistiken sind, wobei eine antizipierte Übertragungsstatistik, die einem gegebenen Wert der momentanen Qualität des Kanals zugeordnet wird, eine berechnete Übertragungsstatistik für die empfangenen Datenpakete im Verhältnis zu einem Zeitpunkt ist, an dem der besagte gegebene Wert der momentanen Qualität des Kanals geschätzt wurde, nach Ablauf einer repräsentativen Antizipationsfrist für die Zeitspanne zwischen einem Zeitpunkt der Schätzung der momentanen Qualität des Kanals und einem Zeitpunkt, an dem ein Übertragungsformat, das in Abhängigkeit vom besagten Schätzwert der momentanen Qualität des Kanals ausgewählt wird, angewandt, und der Empfangseinrichtung präsentiert wird.

10. Kalibriermodul nach einem der Ansprüche 8 bis 9, umfassend Vorrichtungen zum Schätzen von Fehlern in den von der Empfangseinrichtung empfangenen Datenpaketen, und Vorrichtungen zum Schätzen der momentanen Qualität des Kanals.

11. Kalibriermodul nach einem der Ansprüche 8 bis 10, umfassend einen nicht flüchtigen Speicher, in dem eine Historie abgelegt wird, die gemäß der Datenpakete bestimmt wird, die zuvor von der Empfangseinrichtung empfangen worden sind, wobei die Historie so angepasst wird, dass man die Kalibriertabelle unter Berücksichtigung der besagten zuvor von der Empfangseinrichtung empfangenen Datenpakete errechnen kann.

12. Terrestrisches Terminal (2) einer Satelliten-Telekommunikationsanlage, umfassend ein Modul zum Kalibrieren eines Grenzwertes nach einem der Ansprüche 8 bis 11.

13. Satellit (3) einer Satelliten-Telekommunikationsanlage, umfassend ein Modul zum Kalibrieren eines Grenzwertes nach einem der Ansprüche 8 bis 11.

14. Bodenstation (1) einer Satelliten-Telekommunikationsanlage, umfassend ein Modul zum Kalibrieren eines Grenzwertes nach einem der Ansprüche 8 bis 11.

15. Satelliten-Telekommunikationsanlage, umfassend zumindest ein Modul zum Kalibrieren eines Grenzwertes nach einem der Ansprüche 8 bis 11, wobei das besagte Modul in eine der folgenden Apparaturen eingebaut wird oder zwischen zwei der besagten folgenden Apparaturen verteilt wird: ein terrestrisches Terminal (2), ein Satellit (3), eine Bodenstation (1).


**Claims**

1. - Method for calibrating a threshold for selecting a transmission format, from a plurality of transmission formats, in order to exchange data packets over a radio-frequency propagation channel, referred to as the channel $(L_1, L_2, L_3)$, between a transmitting device and a receiving device of a satellite (3) telecommunications system, the selection of the transmission format associated to said threshold being performed by comparing an estimated value of the instantaneous channel quality to said threshold, said method comprising:

   - a step (30) of calculating a table for calibrating the threshold:

      o based on estimated errors in data packets received by the receiving device and using the transmission format associated with the threshold, and
      o based on values of the instantaneous channel quality estimated during reception of said data packets,

   said calibration table associating transmission statistics, representative of an amount of estimated errors for a plurality of data packets previously received by the receiving device, with a plurality of values of the instantaneous channel quality,

- and a step (40) of updating the threshold, which, according to the calibration table, is a value of the instantaneous channel quality enabling a predefined value of the transmission statistics to be provided.

2. - Calibration method according to claim 1, wherein, the satellite (3) being in geostationary orbit, the transmission statistics are anticipated transmission statistics; an anticipated transmission statistic, associated to a given value of the instantaneous channel quality, being a transmission statistic calculated for data packets received, relative to a point in time when said given value of the instantaneous channel quality has been estimated, after expiry of an anticipation period representative of the period between an instantaneous channel quality estimation point in time and a point in time when a transmission format, selected according to said estimated value of the instantaneous channel quality, is applied and presented to the receiving device.

3. - Calibration method according to claim 2, wherein the calculation step (30) comprises:

- a sub-step (300) of time-shifting estimated values of the instantaneous channel quality so as to associate said estimated values of the channel quality to data packets received, relative to the points in time when said values of the instantaneous channel quality were estimated, after expiry of the anticipation period,
- a sub-step (301) of calculating anticipated transmission statistics based on estimated errors for data packets associated to said time-shifted values of the instantaneous channel quality.

4. - Calibration method according to claim 2, wherein the calculation step (30) comprises sub-steps:

- (302) of calculating at least one instantaneous channel quality variation model, based on estimated values of the instantaneous channel quality,
- (303) of calculating instantaneous transmission statistics based on estimated errors for data packets received by the receiving device; an anticipated transmission statistic, associated to a given value of the instantaneous channel quality, is a statistic calculated for received data packets for which said given value of the instantaneous channel quality has been estimated,
- (304) of calculating anticipated transmission statistics by combining at least one instantaneous channel quality variation model and instantaneous transmission statistics.

5. - Calibration method according to one of the preceding claims, wherein the transmission statistics calculation includes a forgetting factor, so as to favor errors estimated for the last data packets received by the receiving device.

6. - Calibration method according to one of the preceding claims, wherein, where there are several receiving devices, thresholds are updated independently for each of said receiving devices, by calculating at least one calibration table per receiving device based on data packets received by that receiving device.

7. - Calibration method according to one of the preceding claims, wherein, during the update step, two thresholds associated with the selection of the same transmission format are updated, a first threshold to be utilized when the estimated value of the channel quality increases, and a second threshold to be utilized when the estimated value of the channel quality decreases.

8. - Module for calibrating a threshold for selecting a transmission format, from a plurality of transmission formats, in order to exchange data packets over a radio-frequency propagation channel, referred to as the channel $(L_1, L_2, L_3)$, between a transmitting device and a receiving device of a satellite telecommunications system, the selection of the transmission format associated to said threshold being performed by comparing an estimated value of the instantaneous channel quality, comprising:

- means of calculating a calibration table for the threshold:

  o based on estimated errors in data packets received by the receiving device and using the transmission format associated with the threshold to be calibrated, and
  o based on values of the instantaneous channel quality estimated during reception of said data packets,

said calibration table associating transmission statistics, representative of an amount of estimated errors for a plurality of data packets previously received by the receiving device, with a plurality of values of the instantaneous channel quality,
- and means of updating the threshold, which, according to the calibration table, is a value of the instantaneous channel quality enabling a predefined value of the transmission statistics to be provided.

9.  - Calibration module according to claim 8, wherein, the satellite (3) being in geostationary orbit, the transmission statistics are anticipated statistics; an anticipated transmission statistic, associated to a given value of the instantaneous channel quality, is a transmission statistic calculated for data packets received, relative to a point in time when said given value of the instantaneous channel quality was estimated, after expiry of an anticipation period representative of the period between an instantaneous channel quality estimation point in time and a point in time when a transmission format, selected according to said estimated value of the instantaneous channel quality, is applied and presented to the receiving device.

10. - Calibration module according to one of claims 8 to 9, comprising means of estimating errors in data packets received by the receiving device, and means of estimating the instantaneous channel quality.

11. - Calibration module according to one of claims 8 to 10, comprising a non-volatile memory in which a history, determined according to the data packets received previously by the receiving device, is stored; the history is designed to allow the calibration table to be calculated taking said data packets previously received by the receiving device into account.

12. - Terrestrial terminal (2) of a satellite telecommunications system, comprising a threshold calibration module according to one of claims 8 to 11.

13. - Satellite (3) of a satellite telecommunications system, comprising a threshold calibration module according to one of claims 8 to 11.

14. - Ground station (1) of a satellite telecommunications system, comprising a threshold calibration module according to one of claims 8 to 11.

15. - Satellite telecommunications system comprising at least one threshold calibration module according to one of claims 8 to 11; said threshold calibration module is embedded in one of the following items of equipment, or distributed between two of said following items of equipment: a terrestrial terminal (2), a satellite (3), a ground station (1).

signal reçu

qualité
du canal

erreurs
détectées

estimation
de la qualité
du canal

10

calcul de table
de statistiques
de transmission

30

comparaison
de la valeur
estimée à
des seuils

20

mise à jour
des seuils

40

nouvelles
valeurs
des seuils

format de
transmission

**Fig. 1**

nombre d'erreurs,
qualité du canal

30

décalage temporel
des valeurs estimées
de la qualité du
canal

300

calcul de taux
d'erreurs anticipés

301

**Fig. 2a**

qualité
du canal

302

nombre
d'erreurs

30

calcul de
modèle de
variation
du canal

calcul de
taux
d'erreurs
instantanés

303

calcul de taux
d'erreurs anticipés

304

**Fig. 2b**

**Fig. 3**

**Fig. 4**

**EP 2 507 928 B1**

## RÉFÉRENCES CITÉES DANS LA DESCRIPTION

**Documents brevets cités dans la description**

- EP 2061167 A

- US 20070110002 A1